(19) Europäisches Patentamt
European Patent Office
Office européen des brevets

(11) EP 4 787 745 A1

(12) **EUROPEAN PATENT APPLICATION**

(43) Date of publication:
05.08.2026 Bulletin 2026/32

(21) Application number: 26154648.5

(22) Date of filing: 28.01.2026

(51) International Patent Classification (IPC):
**H04J 14/02** (2006.01)

(52) Cooperative Patent Classification (CPC):
H04J 14/0265; H04J 14/0279

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 31.01.2025 US 202519043097

(71) Applicant: **Avago Technologies International Sales Pte. Limited Singapore 768923 (SG)**

(72) Inventors:
• **Margalit, Near**
  Irvine, 92618 (US)
• **Ramaswamy, Anand**
  Irvine, 92618 (US)

(74) Representative: **Dilg, Haeusler, Schindelmann Patentanwaltsgesellschaft mbH Leonrodstraße 58 80636 München (DE)**

(54) **EFFICIENT FIBER UTILIZATION WITH WIDELY PARALLEL OPTICAL INTERFACES**

(57) Devices, systems, and methods that utilize an optical medium efficiently, for example by performing bidirectional (BiDi) dense wavelength division multiplexing (DWDM) according to a wavelength plan. Some wavelength plans prioritize or consider radix, energy efficiency, and/or fiber utilization. Some devices can be network devices, such as switches, routers, and/or the like. Some devices can be computers, servers, and/or the like.

Fig. 2

## Description

### Technical Field

This disclosure relates generally to the transmission of data over optical media and more specifically to efficient use of optical media to transmit data.

### Background

In optical communication, Energy Efficient Interfaces (EEI) generally operate a link (transmit and/or receive data) at lower baud rates than traditional interfaces, often using a fairly simple modulation format such as non-return to zero (NRZ). Such operation can dramatically lower the overall power consumption of the link by reducing or eliminating the need for power-hungry digital signal processors (DSP) generally needed to process higher baud-rate data encoded using more complex modulation formats such as Pulse Amplitude Modulation 4-level (PAM4).

The move to a lower baud rate, however, can conflict with the existing trend of increasing bandwidth demands of servers and network devices such as switches. A fiber connecting two nodes in a network must support a certain amount of bandwidth, and a lower baud rate therefore requires additional wavelengths to carry data in order to preserve the overall bandwidth of the fiber link. In many cases, it is necessary or desirable for such wavelengths to travel on a single fiber.

The addition of wavelengths on a fiber, with each wavelength carrying an independent stream of data, is a common approach to increasing fiber bandwidth and is referred to as Wavelength Division Multiplexing (WDM). Dense WDM (DWDM) refers to a technique of spacing the wavelengths close together.

Optical networks are often used to support artificial intelligence (AI) and/or machine learning (ML) workloads. Such workloads place an additional constraint on the backend network of clusters supporting these workloads. Such networks often require a single switching stage fabric for all-to-all connectivity between the compute nodes that form a cluster. The term "radix" is used to refer to the ability of a switch or other network device to operate or support a non-blocking network that can connect multiple inputs to multiple outputs in a grid-like pattern without conflicts, and the degree of radix refers to the number of non-blocking connections such a network device can support in such a grid.

The use of large number of fibers to increase radix is problematic because it consumes valuable shoreline on the package edge of the chip (*e.g.,* a photonic integrated circuit (PIC) operating the switch, lowering chip shoreline bandwidth density and rendering such chips more difficult to manufacture (*e.g.,* with lower yields and higher cost per chip). Multiplexing or de-multiplexing a large number of wavelength channels on a single fiber can also be problematic because it increases optical power requirements and also increases complexity of the light source, which has to support an increased number of wavelengths.

There is a need for a technique that can address these issues.

### Brief Description of the Drawings

Figs. 1A-1C illustrate wavelength plans in accordance with various embodiments.

Fig. 2 is a functional block diagram illustrating a system comprising two optical interfaces in communication over a single fiber, in accordance with various embodiments.

Fig. 3 is a flow diagram illustrating a method of optical communication, in accordance with some embodiments.

Figs. 4A-4D are block diagrams of a device, in accordance with some embodiments.

### Detailed Description

One set of embodiments implements bi-directional (BiDi) technology in combination with DWDM to increase the efficiency of fiber utilization, *e.g.,* by increasing bandwidth and lowering fiber count (compared to traditional approaches) without sacrificing radix. While BiDi technology has been implemented in certain contexts (*e.g.,* fiber to the home (FTTH)), and DWDM has been implemented in various context as well, the inventors have discovered that the combination of these technologies, including, but not limited to, in a datacenter setting, can provide high bandwidth (*e.g.,* 200 Gb/s to 1.6 Tb/s) on a single fiber while employing lower-complexity hardware (*e.g.,* DSPs) and consuming less power than conventional techniques. The solutions enabled by this technology can provide many more wavelengths on a single fiber than conventional systems. Further, by efficiently using a single fiber to transmit and receive this greater number of wavelengths on a single fiber, various embodiments can conserve radix by eliminating the need for multiple fibers to transmit data between two stations *(*e.g., a switch and a compute node in a data center).

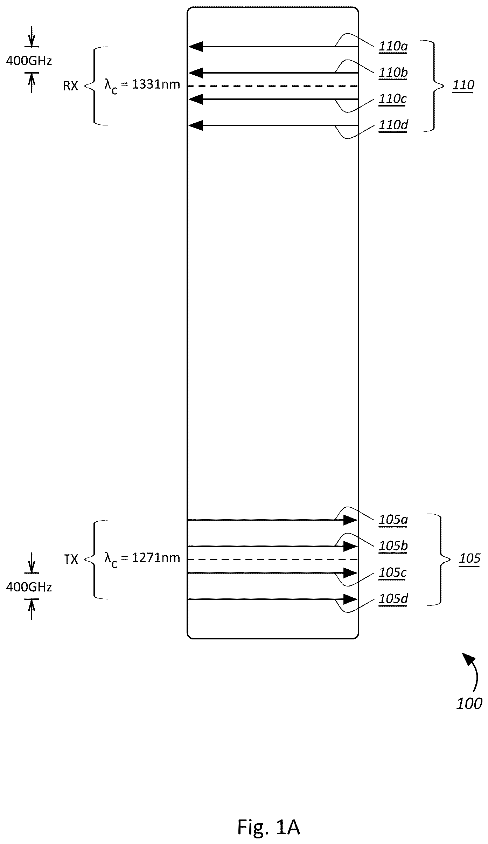

Some embodiments to center each DWDM channel bank (*e.g.,* spaced on a 200 or 400 GHz grid) on each of a plurality of coarse wavelength division multiplexing (CWDM) wavelength ranges. In some embodiments, for example, the center wavelength ($\lambda_c$) of different channel banks might be located at 1271 nm, 1291 nm, 1311 nm, and/or 1331 nm, effectively spanning the O-band of a fiber. In some embodiments, each channel bank can comprise, *e.g.,* 4 to 8 wavelengths. In some embodiments, the center wavelengths of adjacent CWDM bands are separated by 20 nm (*e.g.,* as indicated above). The arrangement of operating wavelengths on a fiber is referred to herein as a "wavelength plan," and Figs. 1A-1C, discussed below, illustrate an exemplary wavelength plan in accordance with such embodiments.

Some embodiments take advantage of the fact that, because the CWDM bands are widely spaced apart, one bank of DWDM channels (residing on one CWDM band) can be transmitted, while another bank of DWDM channels (residing on a different CWDM band) can be received, both on the same fiber. In other words, certain embodiments transmit and receive on the same fiber (BiDi). Instead of using a single wavelength corresponding to a CWDM wavelength, some embodiments transmit and receive a bank of DWDM channels centered on different CWDM bands.

**Exemplary Embodiments**

Certain exemplary embodiments are described below. Each of the described embodiments can be implemented separately or in any combination, as would be appreciated by one skilled in the art. Thus, no single embodiment or combination of embodiments should be considered limiting.

Figs. 1A-1C illustrate wavelength plans that can be implemented by a device (such as the optical interface 200 described in further detail below, the device 400 described in further detail below, and/or a component thereof, such as an optical interface 415, a laser device 420, etc.) in accordance with some embodiments. A wavelength plan in accordance with some embodiments can include at least one center wavelength for transmitting data and at least one center wavelength for receiving data. These center wavelengths, in accordance with some embodiments, correspond to CWDM wavelengths, and they can form the basis for channels arranged according to DWDM. Thus, in some embodiments, a wavelength plan can employ CWDM to establish both transmit and receive center frequencies on the same fiber, providing BiDi communications, while also employing DWDM for channels centered around the center frequencies.

For example, Fig. 1A illustrates a wavelength plan 100 for a single fiber, in which the device transmits on a first plurality of wavelengths 105a-d, which are centered (*e.g.,* evenly spaced around) a first center wavelength, and receives on a second plurality of wavelengths 110a-d, which are centered around a second center wavelength. The term "channel" is used herein to refer to an operating wavelength on which data is transmitted or received (*e.g.,* according to a wavelength plan), and a plurality of such wavelengths is referred to as a "bank" of wavelengths or channels, or simply as a "channel bank."

Thus, the wavelength plan 100 of Fig. 1A comprises two channel banks: a bank 105 of transmit channels 105a-d and a bank 110 of receive channels 110a-d. The transmit bank 105 is centered on a center wavelength ($\lambda_c$) of 1271 nm, while the receive bank 110 is centered on a center wavelength ($\lambda_c$) of 1331 nm. The skilled artisan will appreciate, based on the disclosure herein, that the center wavelength ($\lambda_c$) could also be expressed as a center frequency ($f_c$) by dividing the speed of light (c) by the wavelength:

$$f = \frac{c}{\lambda}$$

such that the transmit bank 105 would have a center frequency ($f_c$) of approximately 2.358 x $10^{14}$ Hz (235.8 THz) and the receive bank 110 would have a center frequency of ($f_c$) of approximately 2.251 x $10^{14}$ Hz (235.8 THz).

A wavelength plan generally is spaced on one or more wavelength grids. As used herein, the term "wavelength grid" refers to a grid that is defined by one or more center wavelengths (defined in meters) and a channel spacing (defined in Hz), which corresponds to a grid spacing (defined in meters) For example, the wavelengths 105a-d and 110a-d in channel banks 105 and 110, respectively, are spaced on a 400 GHz grid, as illustrated by Fig. 1A. Thus, for example, in the wavelength plan 100 of Fig. 1A, the channels can have the following characteristics, shown by Table 1:

**Table 1 - Channels of Fig. 1A**

| Channel | Mode | CWDM $\lambda_c$ (nm) | DWDM $\lambda$ ( nm) | Frequency (THz) |
|---|---|---|---|---|
| 105d | Transmit | 1271 | 1267.85 | 236.4 |
| 105c | | | 1270.00 | 236.0 |
| 105b | | | 1272.16 | 235.6 |
| 105a | | | 1274.32 | 235.2 |
| 110d | Receive | 1331 | 1327.64 | 225.7 |
| 110c | | | 1330.00 | 225.3 |
| 110b | | | 1332.37 | 224.9 |
| 110a | | | 1334.74 | 224.5 |

As shown by Table 1, each of the transmit channels 105a-d in the transmit channel bank 105 is separated by 0.4 THz (400 GHz) and the transmit channel bank 105 itself is centered on the 1271 nm wavelength, which is the CWDM wavelength ($\lambda_c$) for that channel bank. Correspondingly, each of the channels 110a-d in the receive channel bank 110 is separated by 400 GHz, and the receive channel bank 110 is centered on the 1331 nm wavelength. Thus, each of the channels 105a-d and 110a-d is spaced according to a 400 GHz grid.

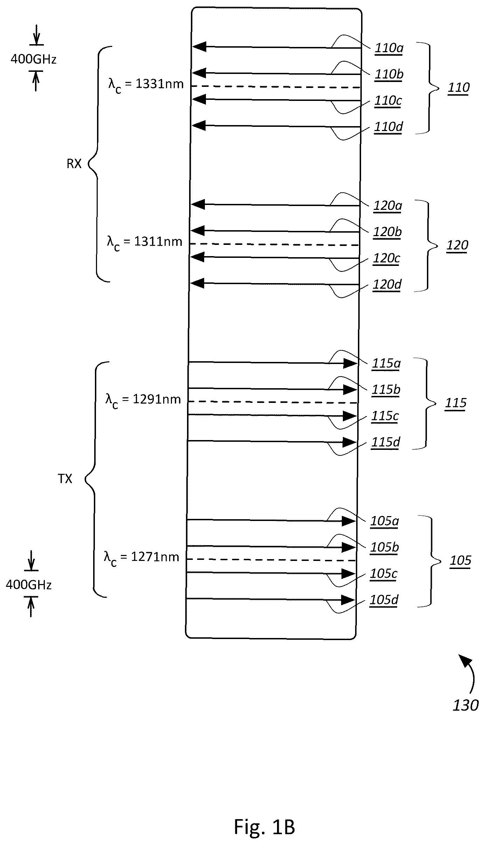

It should be appreciated that embodiments are not limited to a particular number of transmit and receive channel banks; nor is a particular channel bank limited to a particular number of channels. For example, Fig. 1B illustrates a wavelength plan 130 in accordance with some embodiments; this plan 130 features two transmit banks 105 and 115, each comprising four channels 105a-d and 115a-d, respectively. The first transmit bank 105 is centered on 1271 nm, while the second transmit bank 115 is centered on 1291 nm. Similarly, the plan 130 of Fig. 1B features two receive channel banks 110 and 120, comprising channels 110a-d and 120a-d, respectively. The first receive bank 110 is centered on 1331 nm, and the second receive bank 120 is centered on 1311 nm. Table 2 displays the characteristics of the channels depicted in the wavelength plan 130 of Fig. 1B:

**Table 2** - **Channels of Fig. 1B**

| Channel | Mode | CWDM $\lambda c$ (nm) | DWDM $\lambda$ ( nm) | Frequency (THz) |
|---|---|---|---|---|
| 105d | Transmit | 1271 | 1267.85 | 236.4 |
| 105c | | | 1270.00 | 236.0 |
| 105b | | | 1272.16 | 235.6 |
| 105a | | | 1274.32 | 235.2 |
| 115d | Transmit | 1291 | 1287.78 | 232.7 |
| 115c | | | 1290.00 | 232.3 |
| 115b | | | 1292.22 | 231.9 |
| 115a | | | 1294.46 | 231.5 |
| 120d | Receive | 1311 | 1307.71 | 229.2 |
| 120c | | | 1310.00 | 228.8 |
| 120b | | | 1312.29 | 228.4 |
| 120a | | | 1314.60 | 228.0 |
| 110d | Receive | 1331 | 1327.64 | 225.7 |
| 110c | | | 1330.00 | 225.3 |
| 110b | | | 1332.37 | 224.9 |
| 110a | | | 1334.74 | 224.5 |

The skilled artisan should appreciate that the wavelength plan 130 of Fig. 1B is similar to the plan 100 of Fig. 1A, except that it includes an additional channel bank in each of the transmit and receive modes and thus supports twice the channels in each mode compared to the plan 100 of Fig. 1A. It should also be appreciated that the adjacent center wavelengths are separated by 20 nm in CWDM but that such spacing is not required. For example, in some embodiments, the first center wavelength might fall between about 1265 nm and about 1275 nm *(e.g.,* for channel bank 105), the second center wavelength *(e.g.,* for channel bank 110) might fall between about 1325 nm and about 1335 nm, the third center wavelength (e.g., for channel bank 115) might fall between about 1285 nm and 1295 nm, and the fourth center wavelength *(*e.g., for channel bank 120) might fall between about 1305 nm and about 1315 nm.

In some embodiments, a wavelength plan will specify channels and/or center wavelengths to meet certain constraints. For example, if channels are selected on too narrow of a grid, there is a danger of crosstalk between the channels. Likewise, if adjacent center wavelengths are too close, crosstalk between adjacent channel banks can occur. Thus, in some embodiments, center wavelength spacing is selected (*e.g.,* according to CWDM principles) to avoid such crosstalk, for example, with center wavelengths ($\lambda_c$) spaced approximately 20 nm apart. Conversely, if channels are selected on too wide of a grid, channels might encroach into an adjacent channel band.

In other aspects, a wavelength plan can prioritize radix of a switch implementing the plan, for example, by efficiently using the medium (*e.g.,* transmitting and receiving with DWDM on a single fiber between two stations) to allow a switch to operate at a high radix, allowing non-blocking connections between the switch and a relatively high number of nodes connected to the switch. Another consideration in implementing a wavelength plan is to prioritize energy efficiency in the switch or other device implementing the plan. For example, as noted above, wavelength plans provided by some embodiments allow for relatively simple encoding algorithms (*e.g.,* NRZ) which can operate using less complex, and/or more energy-efficient, signal processors.

An optical fiber often can be characterized as having multiple "bands"; for example, the following bands are common in many fibers but should not be considered exclusive:

- O band (1260-1360 nm)
- E band (1360-1460 nm)
- S band (1460-1530 nm)
- C band (1530-1565 nm)
- L band (1565-1625 nm)

As illustrated by the wavelength plans 100 and 130 of Figs. 1A and 1B, respectively, in some embodiments, all of the center frequencies $\lambda_c$ (and, indeed, all of the channel banks) fall within the O band. This can be advantageous because equipment to transmit in the O band often can employ simpler (less complex) amplification than other bands, offers lower cost and simpler system design, consumes less power, and allows higher fiber counts than equipment that transmits in the other bands. While the O band generally is limited to shorter transmission distances than other bands, many embodiments can be employed in data centers, particularly in high-radix applications such as AI or ML processing, which generally does not require lengthy transmission distances. Thus, many embodiments implement wavelength plans that utilize the O band of a fiber.

Embodiments are not so limited, however. For example, some embodiments implement wavelength plans in which all of the center wavelengths and/or channel banks fall within the C band (which can support longer transmission distances, for example), and/or any other appropriate band of a fiber. The selection of the center wavelengths and/or the bands in which they fall can depend on implementation-specific details and/or project constraints and goals.

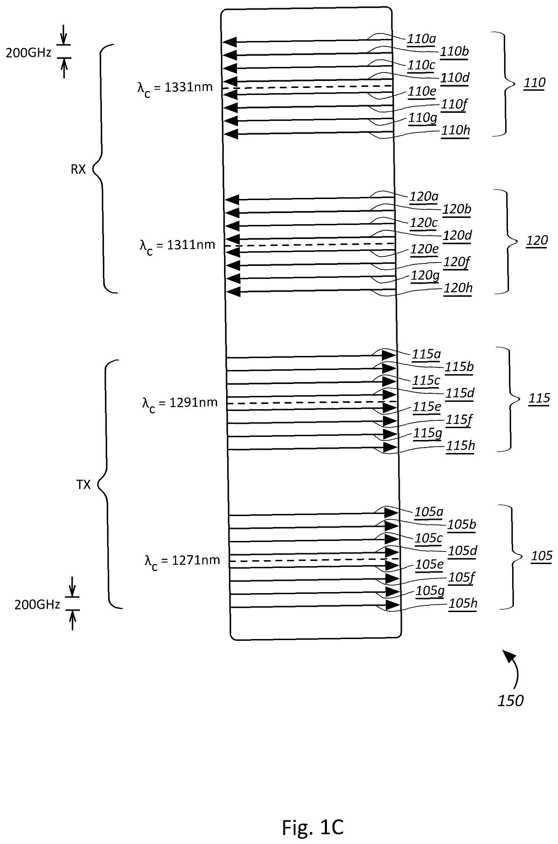

Nor are wavelength plans in accordance with various embodiments limited to 400 GHz grids. For example, Fig. 1C illustrates a wavelength plan 150, in accordance with some embodiments, that spaces channels on a 200 GHz grid. While the plan 150 of Fig. 1C has the same channel banks 105, 110, 115, 120 as the plan 130 of Fig. 1B, the channels are spaced on a 200 GHz grid, so the plan 150 of Fig. 1C can support eight channels per bank, with the exemplary characteristics displayed by Table 3:

**Table 3 - Channels of Fig. 1C**

| Channel | Mode | CWDM λc (nm) | DWDM λ ( nm) | Frequency (THz) |
|---|---|---|---|---|
| 105h | | | 1266.78 | 236.6 |
| 105g | | | 1267.85 | 236.4 |
| 105f | | | 1268.92 | 236.2 |
| 105e | Transmit | 1271 | 1270.00 | 236.0 |
| 105d | | | 1271.08 | 235.8 |
| 105c | | | 1272.16 | 235.6 |
| 105b | | | 1273.24 | 235.4 |
| 105a | | | 1274.32 | 235.2 |
| 115h | | | 1286.68 | 232.9 |
| 115g | | | 1287.78 | 232.7 |
| 115f | | | 1288.89 | 232.5 |
| 115e | Transmit | 1291 | 1290.00 | 232.3 |
| 115d | | | 1291.11 | 232.1 |
| 115c | | | 1292.22 | 231.9 |
| 115b | | | 1293.34 | 231.71 |
| 115a | | | 1294.46 | 231.5 |
| 120h | | | 1306.57 | 229.4 |
| 120g | | | 1307.71 | 229.2 |
| 120f | | | 1308.86 | 229.0 |
| 120e | Receive | 1311 | 1310.00 | 228.8 |
| 120d | | | 1311.15 | 228.6 |
| 120c | | | 1312.29 | 228.4 |
| 120b | | | 1313.44 | 228.2 |
| 120a | | | 1314.60 | 228.0 |
| 110h | | | 1326.47 | 225.9 |
| 110g | | | 1327.64 | 225.7 |
| 110f | | | 1328.82 | 225.5 |
| 110e | Receive | 1331 | 1330.00 | 225.3 |
| 110d | | | 1331.18 | 225.1 |
| 110c | | | 1332.37 | 224.9 |
| 110b | | | 1333.55 | 224.7 |
| 110a | | | 1334.74 | 224.5 |

With the narrower 200 GHz grid, the wavelength plan 150 of Fig. 1C can support eight channels per bank, providing a total of 16 channels in each of the transmit and receive modes, for double the channel capacity of the plan 130 illustrated by Fig. 1B and quadruple the channel capacity of the plan 100 illustrated by Fig. 1A. While each of the wavelength plans in Figs. 1A-1C is exemplary and none is limiting, these plans should illustrate to the skilled artisan that different embodiments can implement a variety of wavelength plans depending on implementation-specific needs and/or equipment capabilities. By way of example, in some embodiments, each channel can support 50 Gb/s, such that the plan 100 of Fig. 1A, with four transmit channels 105a-d and four receive channels 110a-d, can support 200 Gb/s throughput in each direction; the plan 130 of Fig. 1B correspondingly might support 400 Gb/s in each direction, and the plan 150 of Fig. 1C correspondingly might support 800 Gb/s in each direction. Based on the disclosure herein, a skilled artisan can appreciate that some embodiments can support 1.6 Tb/s or higher throughput in each direction.

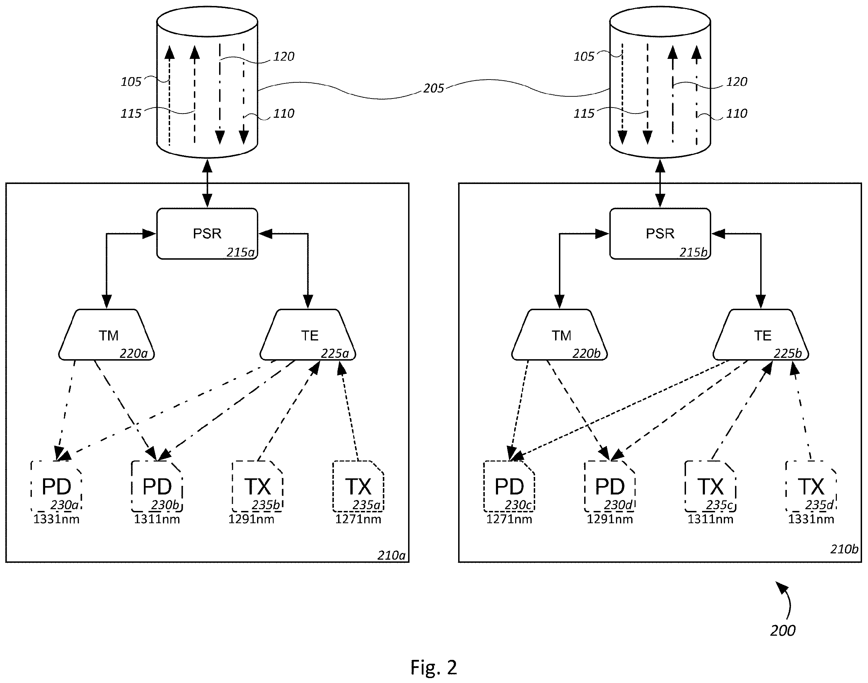

Fig. 2 illustrates system 200 comprising a single optical fiber 205 providing optical communication between a pair of optical interfaces 210 in accordance with some embodiments. Each optical interface 210 includes similar functional components 215, 220 and operates in similar fashion, except that the transmit channel banks 105, 115 of the first interface 210a correspond to the receive channel banks 105, 115 of the second interface 210b, while the receive channel banks 110, 120 of the first interface 210a correspond to the transmit channel banks of the second interface 210b. (For illustrative purposes, each of the channel banks 105-120 correspond to the channel banks illustrated in the wavelength plans of Figs. 1B and 1C, although this is not required. Further, for simplicity, only channel banks 105-120, and not the actual channels 105a-h, 110a-h, 115a-h, and 120a-h, are illustrated on Fig. 2).

The first interface 210a, which is exemplary, comprises a polarization split rotator (PSR) 215a, which splits polarization of the incoming channels (represented by banks 110, 120) into transverse magnetic (TM) 220a and transverse electric (TE) 225a components. Each of these components 220a, 225a of each optical channel in each bank 110, 120 is routed to a corresponding photodiode (PD) 230a, 230b, respectively, for the corresponding wavelength, where electrical signals are recovered from the optical signals on the channels in each bank 110, 120. (While, for the sake of simplicity, only two PDs 230a, 230b are illustrated, corresponding to the channel banks 110, 120, many embodiments will feature one PD per channel, rather than one per channel bank). On the transmit side, an emitter (represented by emitters 235a and 235b) for each channel in channel banks 105, 115 produces optical signals (of which there are only TE components 225a during transmission) from incoming electrical signals and transmits those optical signals on channels 105, 115, respectively, on the same fiber 205 on which the data on channel banks 110, 120 is being received.

In the second interface 210b, which again, is in communication with the opposite end of the fiber 205 from the first interface 210a, a similar process is performed to receive signals on channels 105, 115 and covert those signals using PD represented by 230c, 230d, respectively, to electrical signals while converting electrical signals, with emitters 235c, 235d, to optical signals to be transmitted on channel in banks 110, 120.

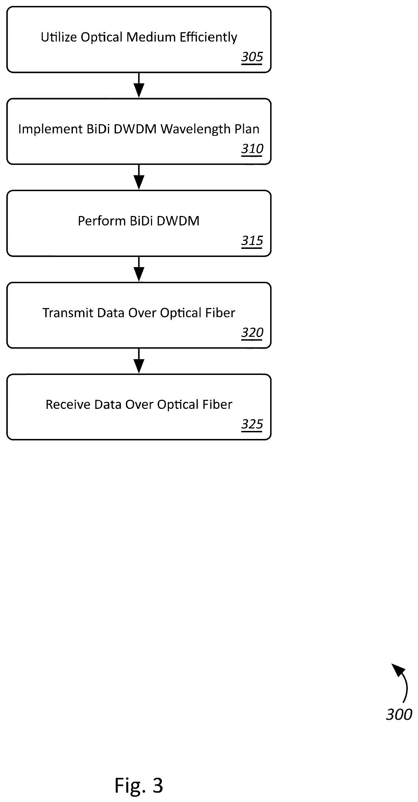

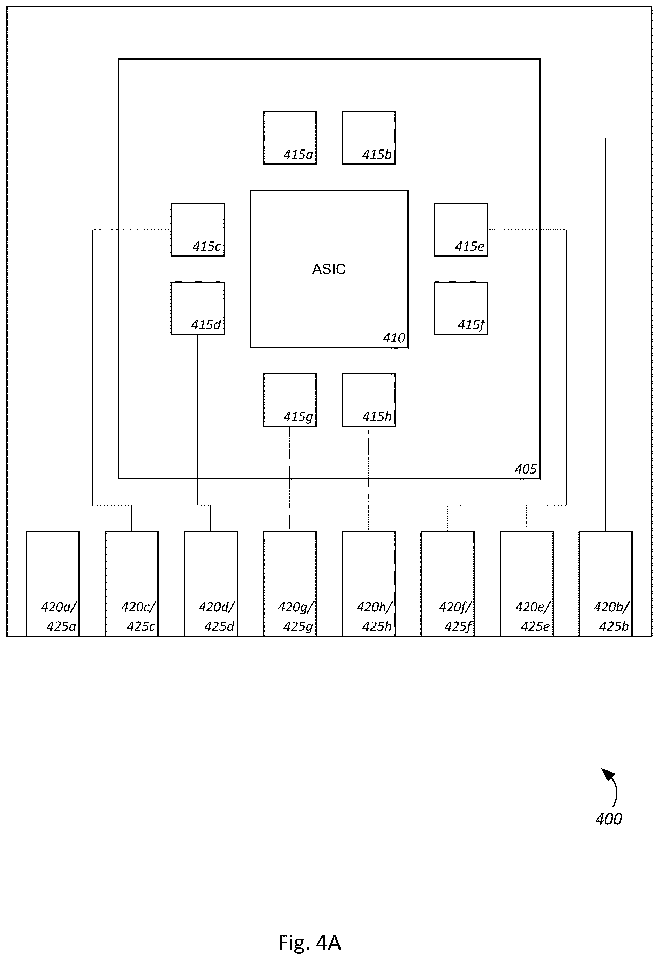

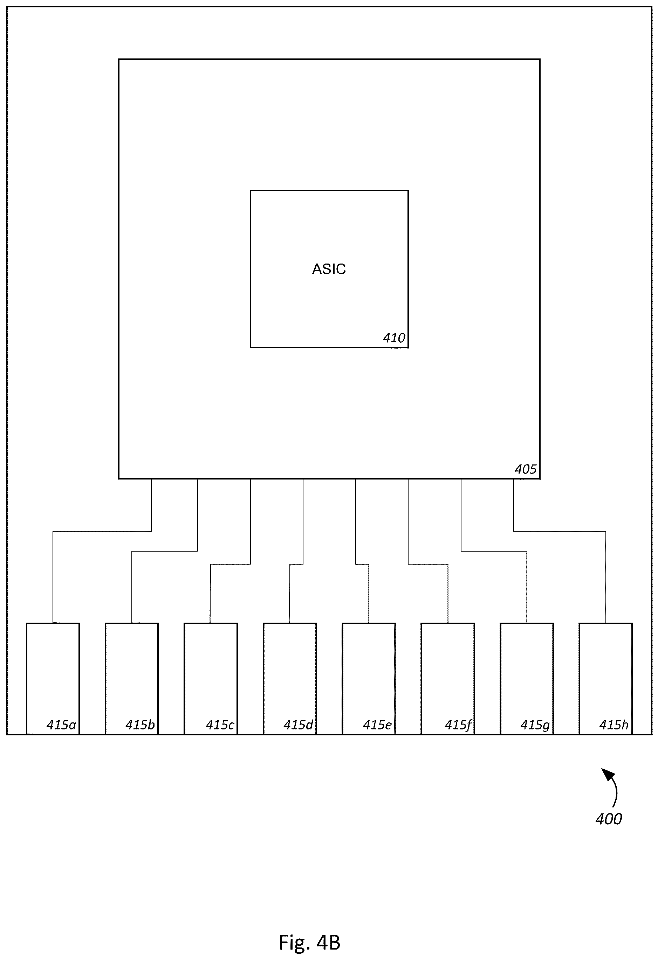

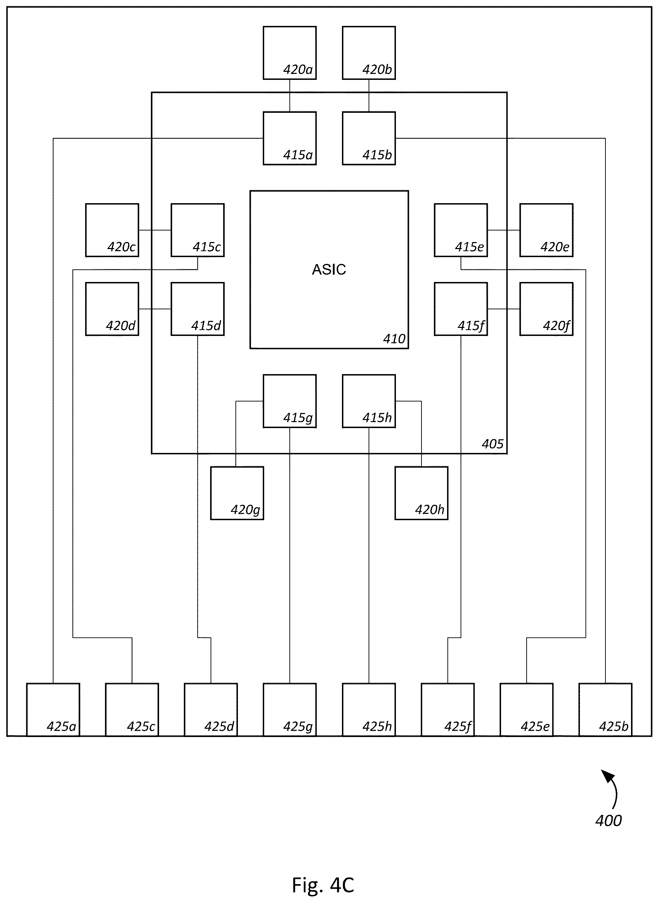

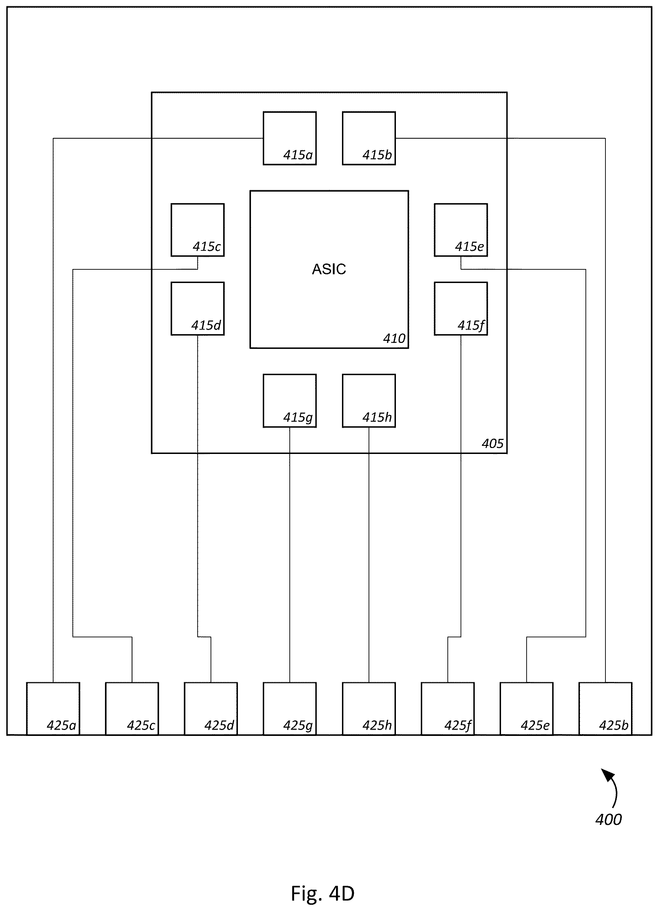

Fig. 3 illustrates a method 300 of optical communications in accordance with some embodiments. The method 300, in some embodiments, can be performed by an optical interface, such as an interface 210 illustrated in Fig. 2, a device, such as the device 400 illustrated by Fig. 4 and described below, and/or one or more components of such a device. It should be appreciated, however, that embodiments are not limited to any particular structural implementation.

At block 305, the method 300 comprises utilizing an optical medium efficiently. A number of techniques can be employed to utilize an optical medium efficiently, in accordance with various embodiments. For example, in some embodiments, utilizing an optical medium efficiently can comprise implementing a BiDi DWDM wavelength plan (block 310), for example a plan similar to one of the plans illustrated by Figs. 1A-1C and described in detail above. In some embodiments, implementing a wavelength plan can comprise configuring one or more optical interfaces to transmit and/or receive optical signals in accordance with the wavelength plan, for example, by installing, programming, configuring, and/or operating appropriate interfaces to transmit and/or receive on channels specified by the wavelength plan. As previously noted, wavelength plans in accordance with various embodiments feature BiDi DWDM. Thus, in some embodiments, implementing a wavelength plan can comprise performing BiDi DWDM (block 315).

For example, in some embodiments, implementing a wavelength plan can comprise (and/or the method 300 can comprise) transmitting data over optical fiber (block 320) and/or receiving data over optical fiber (block 325). Referring to Fig. 2, in particular embodiments transmitting (block 320) and receiving (block 325) optical data can comprise transmitting, *e.g.,* via an optical interface 210a, data over a single optical fiber 205 on a plurality of wavelengths (*e.g.,* channel bank 105) centered around a first center wavelength (*e.g.,* 1271 nm) and/or receiving, *e.g.,* via the optical interface 210a, data over the same single optical fiber 205 on a second plurality of wavelengths (*e.g.,* channel bank 110) centered around a second center wavelength (*e.g.,* 1311 nm), thus performing BiDi DWDM in the transmission and reception of data. In some embodiment, as described in further detail, above transmitting and receiving optical data can further comprise transmitting, *e.g.,* via the optical interface 210a, data over the single optical fiber 205 on a third plurality of wavelengths (*e.g.,* channel bank 115) centered around a third center wavelength (*e.g.,* 1291 nm). In some embodiments, and/or receiving, *e.g.,* via the optical interface 210a, data over the single optical fiber 205 on a fourth plurality of wavelengths (*e.g.,* channel bank 120) centered around a fourth center wavelength (*e.g.,* 1311 nm).

Figs. 4A-4D illustrate various embodiments of a device 400 in accordance with a set of embodiments. In some embodiments, the device 400 can be a network device, such as a network switch (*e.g.,* an Ethernet switch) or router, etc.; a server, compute node (perhaps with an attached networking device, optical network interface card, etc.), leaf, spine, etc.; or any other type of computer networking device, storage networking device, and/or communications device or communication node. In some embodiments, as noted above, the network device 400 can be implemented in a data center. In particular embodiments, the network device 400 might prioritize radix (*e.g.,* as described above) and can be used to provide optical communication between various nodes (*e.g.,* compute nodes, storage nodes, etc.) within a network and/or to provide connectivity to support AI and/or ML operations.

In particular embodiments, the device 400 can operate in a variety of networks including networks compliant with various standards and/or protocols. For example, in some embodiments, the device 400 communicates in accordance with IEEE Ethernet standards (*e.g.,* IEEE 802.3). It should be noted, however, that while this disclosure may reference aspects of these standard(s), the disclosed embodiments are in no way limited by these standard(s). Some standards may relate to storage area networks (SANs) for connecting computer data storage to servers in commercial data centers. SANs can use a Fibre Channel (FC) standard/protocol, small computer system interface (SCSI) standard/protocol, asynchronous transfer mode (ATM) protocol, and/or synchronous optical networking protocol (SONET), to name just a few examples.

In the embodiments illustrated by Figs. 4A-4D, the device 400 comprises a switch unit 405, which comprises a switch circuit 410, and a plurality of optical interface devices 415 (which are also referred to herein as "optical interfaces"). In some cases, the optical interface devices 415 might be incorporated on-chip in the switch unit 405, while in other cases, the optical interface devices 415 might be external to the switch unit 405. Examples of both scenarios are described in further detail below. The optical interface devices 415 can operate functionally as an optical interface such as the optical interface 210a described above in connection with Fig. 2. As used herein, the term "optical interface" or "optical interface device" refers broadly to any device that receives optical signals and provides electrical signals and/or is provided with electrical signals and transmits optical signals. In some embodiments, an optical interface device receives unmodulated laser signals, uses the laser signals to modulate and provide first optical signals in response to electronic signals from a processor (*e.g.,* a switch circuit), and receives second optical signals (*e.g.,* modulated optical signals) and provides electronic signals to the processor in response to the second optical signals. An example of this functionality is described in connection with the optical interfaces 210a, 210b above. The device 400 also generally will include the functionality of one or more laser devices and/or one or more ports.

In some embodiments, *e.g.,* as described in further detail below, an optical interface 415 can be in optical communication with, and/or incorporate the functionality of, a laser device 420. The term "laser device," is used broadly herein to refer to any device that includes at least one laser or other light source that provides at least one light signal suitable for optical communication (*e.g.,* high speed optical communication at 1 Gb/s or above). In some embodiments, the light signal is a laser signal or other optical signal suitable for optical communication. In some embodiments, the laser devices 420 can be configured to transmit single-wavelength or multi-wavelength signals (and/or some combination of both), and the corresponding optical interfaces 415 likewise can be configured to process single-wavelength signals, multi-wavelength signals, or some combination of both. In some embodiments, each laser device can each include more than one laser (*e.g.,* Q number of lasers or sources of light).

In some embodiments, *e.g.,* as described in further detail below, an optical interface can also be in communication with, and/or incorporate the functionality of, a port 425. A port can provide a physical interface to which an external optical cable (comprising one or more optical fibers, such as those described above) can be connected to provide optical communication between the network device 400 and another device or node. Examples of optical ports in accordance with various embodiments include, without limitation, small form pluggable (SFP) ports, SFP+, quad SFP (QSFP), and QSPF+ ports. In some embodiments, the functionality of a laser device 420 and/or port 425 can be incorporated within an optical interface 415, while in other embodiments, as shown in Fig. 3, the laser device 420 (*e.g.,* a RLM or PLS) and/or port 425 can be separate from, and/or in optical communication with, the respective optical interface 415.

In accordance with different embodiments, device 400 can include any number of optical interfaces 415, laser devices 420, and/or ports 425. In an aspect, the device 400 communicates with other nodes or devices using optical signals transmitted and received using the optical interface devices 415. In some cases, as described in further detail below, the optical interface devices 415 operate in conjunction with separate, respective laser devices 420 and/or ports 425, while in other cases, the functionality of the laser devices 420 and ports 425 can be combined together, and/or some or all of the functionality of the laser devices 420 and ports 425 can be incorporated with the optical interface devices 415 themselves.

In some embodiments, each of the optical interface devices 415a-h is configured as generic switch interface that supports some or all of the interface types associated with respective laser devices 420a-h. In some embodiments, the optical interface devices 415a-h are electrically coupled to the switch circuit 410, which can be implemented in any suitable form, *e.g.,* a photonic integrated circuit (PIC), application-specific integrated circuit (ASIC), etc. In some embodiments, the optical interface devices 415a-h are co-packaged optical interfaces (CPOs), which are provided in the same package or housing as the switch circuit 410. In some embodiments, the optical interface devices 415a-h are physically separate from the switch circuit 410 and/or the switch unit 405. In some embodiments, the switch circuit 410 is a 51.2 Tb/s Ethernet switch circuit.

Different embodiments can feature a variety of configurations. For example, Fig. 4A illustrates an implementation according to one set of embodiments, in which each optical interface 415 communicates with a respective laser device 420, which is incorporated with a respective port 425 and/or includes port functionality. For example, in some cases, certain laser devices 420 can be provided in a laser module, which refers broadly to any device that includes one or more laser devices, which might be, but need not necessarily be, housed or contained in a separate structure; for instance, a laser module might comprise a packaged device configured to provide laser light. In some embodiments, a laser module can include heat dissipating components (*e.g.,* heat sinks, Peltier assemblies, etc.), optical components, optical connectors (such as ports 425), and/or electrical components. In some embodiments, a laser module might be a remote laser module (RLM) or pluggable light source (PLS), either of which can be packaged in a multichip module. A RLM or PLS, in some embodiments, can be a remote module that is separate or separable from a corresponding optical interface device 415 and includes at least one laser.

As illustrated by Fig. 4A, a laser device 420 might be integrated with a port 425, and/or might comprise receive and transmit optical multiplexers with optical pass through (OPT) capability for providing light according to various configurations (*e.g.,* single-wavelength per fiber, *M* fibers each carrying *P* wavelengths, etc.) between a respective optical interface 415 and one or more external input/output (I/O) optical fibers (*i.e.,* fibers at the external I/O of the laser device 420). In an aspect, a laser device 420 can support *N* transmit and/or receive channels, *M* external I/O fibers, and *P* wavelengths per external I/O fiber. In particular embodiments, in which each optical interface provides BiDi DWDM on a single fiber (*e.g.,* in accordance with a wavelength plan such as those described above), *M* might be 1, and *P* and *N* each might be equal and have values such as 4, 8, 16, 32, etc. (*i.e.,* a configuration in which the laser device transmits/receives a certain number of channels, using the same number of wavelengths, over a single fiber, for example using the techniques described above).

In other embodiments, for example, as illustrated by Fig. 4B, the optical interfaces 415 include the functionality of a laser device and a port, and/or the optical devices 415 can receive optical signals (*e.g.,* in accordance with a wavelength plan, using BiDi DWDM as described with respect to Fig. 4A and elsewhere above, etc.) from an external optical I/O cable, convert those signals to electrical signals, and provide those electrical signals to the switch circuit 410. Likewise, an optical interface 415 can receive electrical signals from the switch circuit 410, convert those signals to optical signals, and output the optical signals *(e.g.,* in accordance with a wavelength plan, using BiDi DWDM as described with respect to Fig. 4A and elsewhere above, etc.) to an external optical I/O cable.

In other embodiments, for example as illustrated by Fig. 4C, each optical interface might be in optical communication with a respective laser device 420 and a respective port 425. In such cases, the optical device might receive electrical signals from the switch circuit 410 and light from the respective laser device 420, convert the electrical signal to an optical signal modulated onto the received the light, and transmit the modulated optical signal via the respective port 425 through an external I/O cable (*e.g.,* in accordance with a wavelength plan, using BiDi DWDM as described with respect to Fig. 4A and elsewhere above, etc.). Likewise, the optical interface 415 might receive an optical signal via the port 425, convert the optical signal to an electrical signal (*e.g.,* in accordance with a wavelength plan, using BiDi DWDM as described with respect to Fig. 4A and elsewhere above, etc.), and provide the electrical signal to the switch circuit 410.

In further embodiments, such as those illustrated by Fig. 4D, an optical device 415 might include the functionality of a laser device and be in optical communication with a respective port 425. In such cases, the optical device can transmit and receive optical signals (*e.g.,* in accordance with a wavelength plan, using BiDi DWDM as described with respect to Fig. 4A and elsewhere above, etc.), convert optical signals to and from electrical signals, and transmit/receive electrical signals from the switch circuit 405.

Based on the examples of Figs. 4A-4D, the skilled artisan should appreciate that different embodiments can employ a variety of different architectural and/or structural implementations. The skilled artisan should appreciate as well that these examples are provided only for illustrative purposes and that some embodiments can operate differently, and/or include structures that are additional to or different from those depicted in Figs. 4A-4D.

The device 400 can also include logic, including without limitation logic that configures the device 400 and/or components thereof to perform operations in accordance with methods provided by various embodiments, including without limitation some or all of the operations of the method 300 of Fig. 3 and operations to implement wavelength plans such as those described in connection with Figs. 1A-1C. Such logic can take the form of hardware circuits, firmware instructions, and/or software instructions executed by a processor, such as the switch circuit 410, a microcontroller, a communication controller, and/or any other suitable hardware.

It should be noted that, while Fig. 4 illustrates optical interfaces 415, laser devices 420, and ports 425 in a particular arrangement for purposes of illustration, this arrangement is not limiting, and many such arrangements are possible, including without limitation arrangements in which the functionality of a laser device 420 and/or a port 425 is incorporated within an optical interface, such that separate laser devices 420 and/or ports 425 are unnecessary.

Further Examples

The following examples described various features of certain embodiments. All such features of each example described below can be combined in any fashion, and different embodiments thus can include any set or subset of the features described below, as well as various features of the embodiments described above. No particular feature or set of features should be considered required by all embodiments. Conversely, some embodiments can combine some or all of these features in any manner understood, in light of this disclosure, by a skilled artisan.

One set of embodiments provides devices. An exemplary device might comprise an optical interface. In some embodiments, the device comprises logic to utilize an optical medium efficiently by performing bidirectional (BiDi) dense wavelength division multiplexing (DWDM). In some embodiments, the device comprises a network switch. In some embodiments, the network switch is an Ethernet switch. In some embodiments, the logic to utilize the optical medium efficiently prioritizes a radix of the network switch.

In some embodiments, performing BiDi DWDM comprises transmitting, via the optical interface, data over a single optical fiber on a first plurality of wavelengths centered around a first center wavelength. In some embodiments, performing BiDi DWDM comprises receiving, via the optical interface, data over the single optical fiber on a second plurality of wavelengths centered around a second center wavelength. In some embodiments, performing BiDi DWDM comprises transmitting, via the optical interface, data over a single optical fiber on a third plurality of wavelengths centered around a third center wavelength. In some embodiments, performing BiDi DWDM comprises receiving, via the optical interface, data over the single optical fiber on a fourth plurality of wavelengths centered around a fourth center wavelength

In some embodiments, the first center wavelength and second center wavelength are spaced sufficiently to avoid crosstalk between a transmit path and a receive path in the optical interface. In some embodiments, the first plurality of wavelengths and the second plurality of wavelengths each comprises between 4 and 8 wavelengths spaced on a grid between about 200 GHz and 400 GHz. In some embodiments, adjacent center wavelengths are separated by about 20 nm.

In some embodiments, the first center wavelength is between about 1265 nm and about 1275 nm. In some embodiments, the second center wavelength is between about 1325 nm and about 1335 nm. In some embodiments, the third center wavelength is between about 1285 nm and 1295 nm. In some embodiments, the fourth center wavelength is between about 1305 nm and about 1315 nm.

In some embodiments, each of the first plurality of wavelengths and each of the second plurality of wavelengths fall within an O band of the single optical fiber. In some embodiments, each of the first plurality of wavelengths and each of the second plurality of wavelengths fall within a C-band of the single optical fiber.

A device in accordance with another set of embodiments might comprise logic to implement a (BiDi) dense wavelength division multiplexing (DWDM) wavelength plan. In some embodiments, the BiDi DWDM plan considers energy efficiency, radix, and fiber utilization. In some embodiments, the device comprises logic to transmit, on a single fiber and according to the BiDi DWDM wavelength plan, data on at least one bank of transmit wavelengths centered around at least one transmit center wavelength. In some embodiments, the device comprises logic to receive, on the single fiber, data on at least one bank of receive wavelengths centered around at least one receive center wavelength. In some embodiments, the at least one bank of transmit wavelengths comprises a plurality of banks of transmit wavelengths each centered around a respective one of a plurality of transmit center frequencies. In some embodiments, the at least one bank of receive wavelengths comprises a plurality of banks of receive wavelengths each centered around a respective one of a plurality of receive center frequencies.

Another set of embodiments provides methods. An exemplary method might comprise utilizing an optical medium efficiently by performing bidirectional (BiDi) dense wavelength division multiplexing (DWDM). In some embodiments, performing BiDi DWDM comprises transmitting, via an optical interface, data over a single optical fiber on a first plurality of wavelengths centered around a first center wavelength. In some embodiments, performing BiDi DWDM comprises receiving, via the optical interface, data over the single optical fiber on a second plurality of wavelengths centered around a second center wavelength.

In some embodiments, performing BiDi DWDM comprises transmitting, via the optical interface, data over a single optical fiber on a third plurality of wavelengths centered around a third center wavelength. In some embodiments, performing BiDi DWDM comprises receiving, via the optical interface, data over the single optical fiber on a fourth plurality of wavelengths centered around a fourth center wavelength.

In some embodiments, the first center wavelength and second center wavelength are spaced sufficiently to avoid crosstalk between a transmit path and a receive path in the optical interface. In some embodiments, the first plurality of wavelengths and the second plurality of wavelengths each comprises between 4 and 8 wavelengths spaced on a grid between about 200 GHz and 400 GHz. In some embodiments, adjacent center wavelengths are separated by about 20 nm.

In some embodiments, the first center wavelength is between about 1265 nm and about 1275 nm. In some embodiments, the second center wavelength is between about 1325 nm and about 1335 nm. In some embodiments, the third center wavelength is between about 1285 nm and 1295 nm. In some embodiments, the fourth center wavelength is between about 1305 nm and about 1315 nm.

In some embodiments, each of the first plurality of wavelengths and each of the second plurality of wavelengths fall within an O band of the single optical fiber. In some embodiments, each of the first plurality of wavelengths and each of the second plurality of wavelengths fall within a C band of the single optical fiber.

Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the embodiments in general to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components (including without limitation processors, other hardware circuitry, custom integrated circuits (ICs), programmable logic, etc.), and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, software, or a combination of any of these. It will be apparent that systems and/or methods described herein may be implemented in different forms of hardware, firmware, and/or a combination of hardware and software. The actual specialized control hardware or software code used to implement these systems and/or methods does not limit any embodiments unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (*e.g.,* if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (*i.e.,* each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (*e.g.,* related items, unrelated items, a combination of related and unrelated items, and/or the like), and may be used interchangeably with "one or more." Where only one item is intended, the phrase "only one" or similar language is used. As used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

**Claims**

1.  A method comprising:
    utilizing an optical medium efficiently by performing bidirectional, BiDi, dense wavelength division multiplexing, DWDM, wherein performing BiDi DWDM comprises:

    transmitting, via an optical interface, data over a single optical fiber on a first plurality of wavelengths centered around a first center wavelength; and
    receiving, via the optical interface, data over the single optical fiber on a second plurality of wavelengths centered around a second center wavelength.

2.  The method of claim 1, wherein
    the first center wavelength and second center wavelength are spaced sufficiently to avoid crosstalk between a transmit path and a receive path in the optical interface.

3.  The method of claim 1 or 2, wherein
    the first plurality of wavelengths and the second plurality of wavelengths each comprises between 4 and 8 wavelengths spaced on a grid between about 200 GHz and 400 GHz.

4.  The method of any one of the claims 1 to 3, wherein
    performing BiDi DWDM further comprises:

    transmitting, via the optical interface, data over a single optical fiber on a third plurality of wavelengths centered around a third center wavelength; and
    receiving, via the optical interface, data over the single optical fiber on a fourth plurality of wavelengths centered around a fourth center wavelength.

5.  The method of claim 4, wherein:

    the first center wavelength is between about 1265 nm and about 1275 nm;
    the second center wavelength is between about 1325 nm and about 1335 nm;
    the third center wavelength is between about 1285 nm and 1295 nm; and
    the fourth center wavelength is between about 1305 nm and about 1315 nm.

6.  The method of claim 4, wherein
    adjacent center wavelengths are separated by about 20 nm.

7.  The device of any one of the claims 1 to 6, wherein
    each of the first plurality of wavelengths and each of the second plurality of wavelengths fall within an O band of the single optical fiber.

8. The device of any one of the claims 1 to 7, wherein
each of the first plurality of wavelengths and each of the second plurality of wavelengths fall within a C band of the single optical fiber.

9. The method of any one of the claims 1 to 8, further comprising
prioritizing a radix of a switch transmitting and receiving the data.

10. A device comprising:

an optical interface;
logic to control and/or carry out a method as set forth in any one of the preceding claims.

11. The device of claim 10, wherein
the device comprises a network switch.

12. The device of claim 11, wherein
the network switch is an Ethernet switch.

13. The device of claim 10 or 11, wherein
the logic to utilize the optical medium efficiently prioritizes a radix of the network switch.

14. A device comprising:

logic to implement a bidirectional, BiDi, dense wavelength division multiplexing, DWDM, wavelength plan that considers energy efficiency, radix, and fiber utilization;
logic to transmit, on a single fiber and according to the BiDi DWDM wavelength plan, data on at least one bank of transmit wavelengths centered around at least one transmit center wavelength; and
logic to receive, on the single fiber, data on at least one bank of receive wavelengths centered around at least one receive center wavelength.

15. The device of claim 14, wherein:

the at least one bank of transmit wavelengths comprises a plurality of banks of transmit wavelengths each centered around a respective one of a plurality of transmit center frequencies; and
the at least one bank of receive wavelengths comprises a plurality of banks of receive wavelengths each centered around a respective one of a plurality of receive center frequencies.

Fig. 1A

400GHz

$\lambda_c = 1331$nm

RX

$\lambda_c = 1311$nm

TX

$\lambda_c = 1291$nm

$\lambda_c = 1271$nm

400GHz

110a
110b
110c
110d
110

120a
120b
120c
120d
120

115a
115b
115c
115d
115

105a
105b
105c
105d
105

130

Fig. 1B

Fig. 1C

Fig. 2

```
┌─────────────────────────────────────────┐
│                                          │
│      Utilize Optical Medium Efficiently  │
│                                          │
│                              305         │
│                                          │
└─────────────────────────────────────────┘
                     │
                     ▼
┌─────────────────────────────────────────┐
│                                          │
│   Implement BiDi DWDM Wavelength Plan    │
│                                          │
│                              310         │
│                                          │
└─────────────────────────────────────────┘
                     │
                     ▼
┌─────────────────────────────────────────┐
│                                          │
│           Perform BiDi DWDM              │
│                                          │
│                              315         │
│                                          │
└─────────────────────────────────────────┘
                     │
                     ▼
┌─────────────────────────────────────────┐
│                                          │
│      Transmit Data Over Optical Fiber    │
│                                          │
│                              320         │
│                                          │
└─────────────────────────────────────────┘
                     │
                     ▼
┌─────────────────────────────────────────┐
│                                          │
│      Receive Data Over Optical Fiber     │
│                                          │
│                              325         │
│                                          │
└─────────────────────────────────────────┘
```

*300*

Fig. 3

415a
415b
415c
ASIC
415e
415d
410
415f
415g
415h
405

420a/
425a
420c/
425c
420d/
425d
420g/
425g
420h/
425h
420f/
425f
420e/
425e
420b/
425b

400

Fig. 4A

ASIC

*410*

*405*

*415a*  *415b*  *415c*  *415d*  *415e*  *415f*  *415g*  *415h*

*400*

Fig. 4B

Fig. 4C

Fig. 4D

Europäisches
Patentamt
European
Patent Office
Office européen
des brevets

# EUROPEAN SEARCH REPORT

**Application Number**

EP 26 15 4648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 658 210 B1 (FEE JOHN A [US]) 2 December 2003 (2003-12-02) <br><br> * column 1, line 58 - column 2, line 2; figure 2 * <br> * column 3, line 30 - column 4, line 11 * <br> ----- | 1-8, 10-12, 14,15 | INV. <br> H04J14/02 |
| X | US 2005/025486 A1 (ZHONG JOHNNY [US] ET AL) 3 February 2005 (2005-02-03) <br> * paragraph [0045]; figure 6 * <br> ----- | 1,10,14 | |
| X | EP 1 251 651 A1 (CIT ALCATEL [FR]) 23 October 2002 (2002-10-23) <br><br> * claim 1; figures 2,3 * <br> ----- | 1-8, 10-12, 14,15 | |
| X | US 2024/077781 A1 (NAHMIAS MITCHELL A [US] ET AL) 7 March 2024 (2024-03-07) <br> * paragraph [0313] - paragraph [0316]; figures 26,27 * <br> * paragraph [0307]; figure 20 * <br> ----- | 1-15 | |

**TECHNICAL FIELDS SEARCHED (IPC)**

H04J

The present search report has been drawn up for all claims

| Place of search | Date of completion of the search | Examiner |
|---|---|---|
| Munich | 19 June 2026 | Borsier, Celine |

EPO FORM 1503 03.82 (P04C01)

**EP 4 787 745 A1**

## ANNEX TO THE EUROPEAN SEARCH REPORT
## ON EUROPEAN PATENT APPLICATION NO.

EP 26 15 4648

19-06-2026

| Patent document cited in search report | | Publication date | Patent family member(s) | Publication date |
|---|---|---|---|---|
| US 6658210 | B1 | 02-12-2003 | NONE | |
| US 2005025486 | A1 | 03-02-2005 | NONE | |
| EP 1251651 | A1 | 23-10-2002 | NONE | |
| US 2024077781 | A1 | 07-03-2024 | NONE | |

EPO FORM P0459